# FASCICULE DE BREVET EUROPEEN

(11) **EP 2 175 245 B1**
(45) Date de publication et mention de la délivrance du brevet: **11.08.2010**
(21) Numéro de dépôt: 08305661.4
(22) Date de dépôt: 09.10.2008
(51) Int. Cl.: G01D 5/38

(54) **Système optique pour la mesure rapide de la position d'un corps en mouvement**
Optisches System zur Positionsschnellmessung eines Körpers in Bewegung
Optical system for quickly measuring the position of a moving body

(43) Date de publication de la demande: 14.04.2010
(73) Titulaire: Delphi Technologies, Inc., Troy, Michigan 48007 (US)
(72) Inventeur: Ndao, Mandiaye, 67000 Strasbourg (FR); Tupinier, Laurent, 67116 Reichstett (FR)
(74) Mandataire: Robert, Vincent

(56) Documents cités:
- EP-A- 1 382 941
- GB-A- 2 210 525
- US-A1- 2004 155 178
- US-A1- 2007 018 084

## Description

La présente invention a trait à un système optique pour la lecture de la position d'un corps en mouvement, et notamment de la position angulaire d'un corps en rotation. Elle s'applique plus particulièrement à un système comportant une source de lumière émettant un faisceau de lumière laser vers un codeur optique diffractif solidaire du corps en mouvement, comportant des cellules de codage dotées d'au moins un motif diffractif et positionnées en vue d'interférer successivement avec le faisceau. Chaque cellule génère un code optique numérique par modulation de phase sous forme de taches lumineuses discrètes, et code au moins la position de la cellule dans le corps en mouvement.

Dans de tels systèmes, comme par exemple décrits dans US 2004/155178 A1ou GB-A-2 210 525, il existe des moyens de calibrage qui contrôlent la section du faisceau, typiquement sous la forme d'un diaphragme placé sur le trajet du faisceau lumineux, dont la fente limite le passage de la lumière pour adapter la section du faisceau aux dimensions des cellules de codage.

En aval du codeur optique, le système comporte enfin au moins un dispositif de détection dit primaire du signal constitué par le code optique. Traditionnellement, ce dispositif de détection comporte au moins une rangée de cellules de détection.

Les taches de lumière constituant le code numérique présentent cependant une surface limitée, de sorte qu'il est nécessaire de positionner ledit dispositif de détection avec une précision élevée, qui s'avère pénalisante notamment dans une perspective d'industrialisation imposant des coûts de mise en oeuvre raisonnables.

Par ailleurs, les moyens de calibrage du faisceau lumineux, lorsqu'ils sont constitués par un diaphragme, conduisent à l'utilisation d'une fente d'une largeur d'environ 100 µm qui aboutit à l'obtention des taches de surface limitée mentionnées auparavant. Ces taches pourraient en théorie être agrandies au moins dans une direction un peu à la manière d'un code barre par limitation de la largeur de la fente, ces deux dimensions variant en fonction inverse l'une de l'autre.

Réduire encore la fente conduirait cependant simultanément à une perte de plus de 95% de la lumière traversant le diaphragme, diminuant dès lors de manière considérable l'efficacité énergétique du système et augmentant de façon disproportionnée son rapport signal/bruit.

La présente invention présente une solution qui remédie à ces inconvénients, qui permet en substance d'allonger les taches sans perte d'énergie tout en proposant une configuration économiquement bien plus intéressante car moins critique en termes d'ajustements.

A cet effet, le système optique de l'invention, obéissant aux caractéristiques précitées, se caractérise à titre principal en ce que les dimensions relatives des cellules de codage et de la fente du diaphragme, dans la direction du mouvement, sont telles que ladite fente couvre sensiblement n cellules, le corps en mouvement comportant une succession de groupes de n cellules générant au moins au niveau du dispositif de détection primaire le même code optique avec un décalage spatial des taches par rapport aux taches des codes des cellules adjacentes du même groupe.

Pour préserver l'efficacité énergétique du faisceau lumineux, les dimensions de la fente ou « fenêtre du diaphragme ne sont pas modifiées, mais on crée en réalité des fenêtres virtuelles plus étroites directement au niveau du codeur, en réduisant la taille des cellules de codage, en vue d'aboutir à un effet d'allongement des taches équivalent à celui obtenu par une réduction de largeur de la fente. Au niveau de ces fenêtres virtuelles, la transformation de l'onde incidente est réalisée par modulation de phase, et il n'y a donc pas de limitation de l'énergie lumineuse contrairement à ce qui se produit en cas de réduction de la largeur de la fente du diaphragme. Le décalage entre taches précité est mis en oeuvre afin d'éviter les interférences destructives entre le même signal à présent multiplié par les fenêtres contiguës du même groupe.

Selon un premier mode de réalisation, les motifs diffractifs des n cellules de codage de chaque groupe génèrent des décalages des taches de leur code dans la direction de l'axe de la ou des rangées de cellules du dispositif de détection primaire. Plutôt que de taches, il s'agit de traits lumineux puisque lesdites taches ont été allongées en une configuration de type code barre. Le décalage dans cette direction enrichit l'information en la multipliant.

Selon une alternative, les motifs diffractifs des n cellules de codage de chaque groupe génèrent des décalages des taches du code dans une direction d'allure perpendiculaire à l'axe de la ou des rangées de cellules du dispositif de détection primaire.

Ce second décalage améliore en quelque sorte la robustesse du dispositif en diminuant encore la nécessité d'aboutir à un alignement précis des composants du système.

Dans le premier cas, ledit système conduit à une répétition du signal sur le dispositif de détection, dans la direction de l'axe de la ou des rangées des cellules de détection, ce qui peut être exploité en réalisant un contrôle de mesure par comparaison des signaux décalés.

Dans le second cas, c'est l'allongement perpendiculairement au dispositif de détection qui est multiplié, conduisant à des traits beaucoup plus longs, rendant encore moins critique le positionnement de la ou des rangées de cellules de détection par rapport au reste des composants du système optique.

il peut être nécessaire ou utile que les motifs diffractifs des n cellules de codage de chaque groupe génèrent un double décalage des taches du code dans deux directions d'allure respectivement parallèle et perpendiculaire à l'axe de la ou des rangées de cellules de détection, afin de garantir dans tous les cas une absence d'interférence entre les codes optiques obtenus par les cellules de codage adjacentes d'un même groupe de n cellules.

L'existence de fenêtres virtuelles plus étroites constituées de cellules de codage plus étroites que le diaphragme présente d'autres intérêts, dont la possibilité d'accroître sensiblement la vitesse de lecture des informations contenues dans les cellules de codage par le système de traitement électronique relié au dispositif de détection.

Le code optique numérique lu au niveau du dispositif de détection primaire est, du fait de la résolution de la mesure demandée en particulier pour les capteurs d'angle dans le domaine de l'automobile, codé en général sur au moins 12 bits. Cela nécessite de la part des cellules du dispositif de détection, et d'un microcalculateur du système de traitement électronique placé en aval, un temps de traitement qui est incompatible avec les exigences les plus récentes des constructeurs automobiles. Ceux-ci sont en effet demandeurs de systèmes capables de générer une nouvelle valeur d'angle, correspondant à un rafraichissement du signal d'une périodicité inférieure à 1 ms. Cela permet par exemple de calculer la vitesse de rotation de la colonne de direction d'un véhicule.

Selon l'invention, pour répondre à cette problématique, le code optique numérique généré par le codeur diffractif dans chaque cellule de codage peut être composite, chaque cellule multiplexant alors au moins deux signaux distincts constituant des fractions du code, une fraction principale commune aux n cellules de chaque groupe et au moins une fraction secondaire.

L'idée est de traiter à part une fraction simple et réduite du code, dont le temps de traitement est alors plus rapide et permet de fournir des valeurs de codes exploitables plus fréquemment. Pour chaque groupe de n cellules de codage, la fraction principale inchangée du code, lue sur le dispositif de détection primaire, est gérée par les moyens de traitement électronique d'une manière classique sans nécessité d'accélération du traitement.

Le multiplexage des signaux dans une même cellule de codage permet d'éviter les inconvénients de solutions antérieures utilisant des pistes différentes pour les différents signaux, aboutissant de fait à créer un problème additionnel de tolérance de positionnement des différents composants du système optique de l'invention.

En fait, chaque fraction secondaire du code optique numérique est lue par un dispositif de détection secondaire distinct du dispositif de détection primaire. Les codes lus par les différents dispositifs de détection sont par ailleurs traités par des moyens de traitement séparés. La possibilité d'accélération du traitement résulte alors de la possibilité, pour ces moyens additionnels de traitement, de traiter des signaux numériques codés sur un petit nombre de bits.

Ainsi, l'une des fractions du code composite peut être constituée par au moins les deux bits de moindre signification du code numérique donnant la position de la cellule de codage.

Alternativement, l'une des fractions du code composite peut être constituée par des signaux de synchronisation en quadrature de phase. Ceux-ci sont au nombre de deux, codables sur deux bits.

L'externalisation d'un nombre réduit de bits sur un ou des dispositifs de détections séparés permet de diminuer la charge du microcontrôleur principal du système de traitement électronique, et/ou d'y envoyer des signaux spécifiquement prévus pour des fonctions particulières. En particulier, il est possible de générer un signal incrémental additionnel permettant une lecture de position combinant une mesure absolue donnée par la fraction principale du code et une mesure relative donnée par le signal incrémental, les deux signaux permettant une mesure de position à une fréquence bien plus élevée qu'auparavant.

Pour éviter les interférences destructives, le décalage spatial des taches lumineuses de cellules de codage adjacentes s'applique aussi au niveau des dispositifs de détection secondaires détectant les fractions secondaires du code optique numérique.

Dans l'hypothèse où le corps est animé d'un mouvement de rotation, le codeur peut être prévu de géométrie circulaire et les cellules de codage sont alors disposées sur une piste annulaire divisée en portions de secteurs angulaires. Lesdites cellules, faisant en l'occurrence office de fenêtres virtuelles, deviennent alors en quelque sorte des divisions de la surface de la fente ou fenêtre principale du diaphragme, qui en "couvre" plusieurs.

L'invention va à présent être décrite plus en détail, en référence aux figures annexées, pour lesquelles :
- la figure 1 est une vue schématique d'un dispositif de l'art antérieur, montrant le type de code optique obtenu ;
- la figure 2 représente le code optique obtenu lorsque les motifs diffractifs des fenêtres virtuelles sont décalés perpendiculairement à l'axe de la rangée des cellules de détection ;
- la figure 3 représente l'équivalent de la figure 2 pour un décalage selon l'axe desdites cellules de détection ; et
- La figure 4 illustre la possibilité offerte par l'invention de coder des signaux composites, avec deux fractions du code complet traitées à part par des dispositifs de détection distincts.

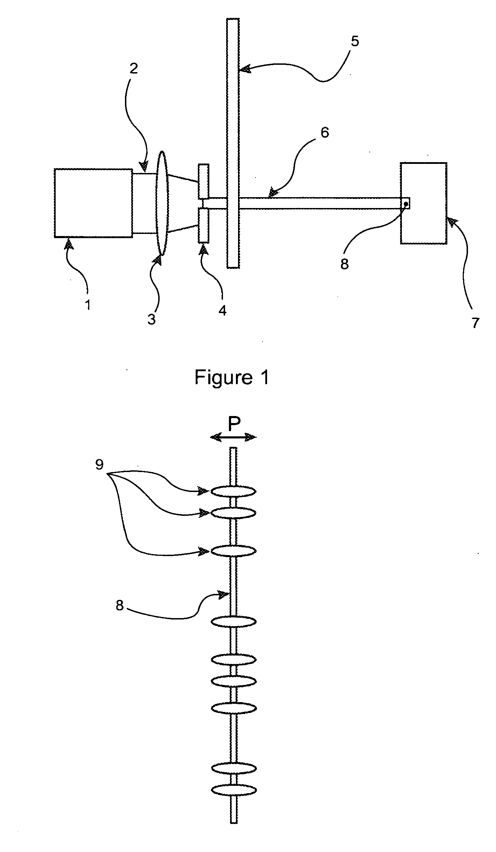

En référence à la figure 1, la source de lumière (1), en l'espèce une diode laser, émet un faisceau lumineux (2) de lumière à destination d'une lentille de projection (3) en sortie duquel le faisceau est concentré vers un diaphragme (4) dans lequel est pratiquée une fente qui limite la section active du faisceau. Ce dernier, ainsi formaté par le diaphragme (4), est envoyé à destination d'un codeur (5) en l'espèce solidaire d'un élément en rotation (non représenté) dont on veut connaître la position angulaire.

Le codeur (5) comporte des cellules de codage, en sortie desquelles un signal lumineux (6) sous forme de taches lumineuses (9) formant un code optique numérique est envoyé à destination d'un dispositif de détection (7) comportant au moins une rangée (8) de cellules de détection.

La forme des taches lumineuses (9) apparaît dans le bas de la figure 1. Compte tenu de la surface limitée occupée par lesdites taches dans les systèmes de l'art antérieur, le positionnement de la rangée (8) doit être effectué de manière très précise pour que la détection puisse s'opérer de manière correcte. Par ailleurs, comme déjà mentionné auparavant, l'existence du diaphragme (4), comportant une fente d'allure rectangulaire et de dimension réduite, conduit à ne laisser passer qu'environ 10% de l'énergie lumineuse à destination du codeur (5). Cette réduction considérable de l'énergie utilisée aboutit à diminuer l'efficacité du système.

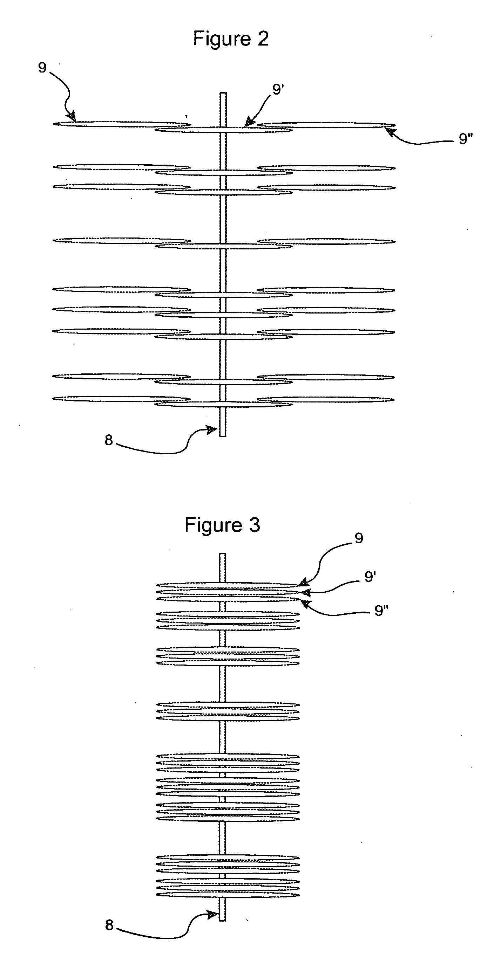

En réponse à ces inconvénients, l'invention permet l'obtention des codes barres représentés en figures 2 et 3, qui permettent un positionnement moins contraignant du dispositif de détection (7) par rapport au signal (6) issu du codeur optique (5) diffractif de l'invention. Ainsi, en figure 2, les traits (9), déjà rallongés par rapport à ceux que l'on obtient dans une configuration classique, grâce à la faible largeur des cellules de codage, formant des fenêtres virtuelles se substituant à la fenêtre du diaphragme (4), voient de plus leur longueur totale augmentée par les traits (9') et (9") du fait de l'existence de deux cellules adjacentes du même groupe générant le même code optique et contenues dans ladite fenêtre réelle du diaphragme (4). La robustesse du système s'en trouve grandement améliorée.

En figure 3, les traits (9, 9', 9") se répètent le long de l'axe de la rangée (8) de cellules de détection, permettant le cas échéant la mise en oeuvre d'un calcul de contrôle par redondance. Dans ces deux cas, l'existence de trois traits (9, 9', 9") signifie que trois fenêtres virtuelles ont été mises en place dans les cellules de codage, dans la largeur de la fente du diaphragme.

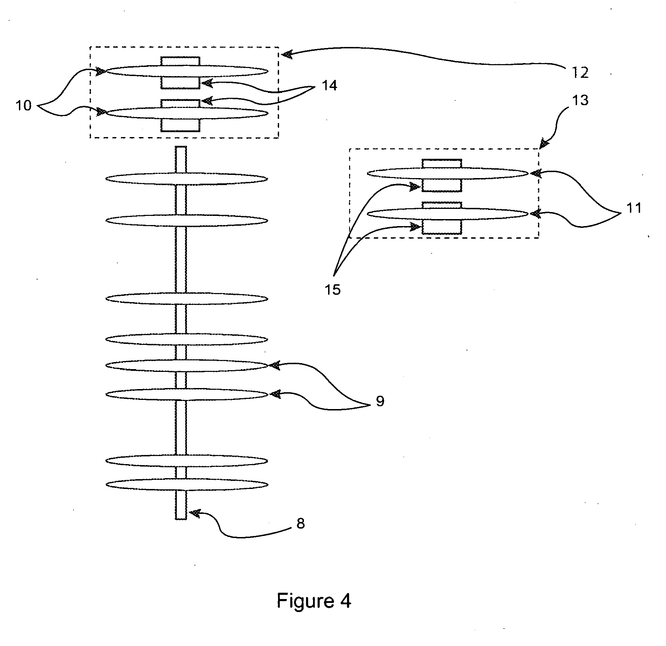

En référence à la figure 4; les cellules de codage multiplexent un signal numérique composite constitué d'une fraction principale et de deux fractions secondaires donnant lieu à des taches respectivement (10, 11) lues sur deux dispositifs de détection distincts (12, 13). Les taches (10, 11) sont également allongées à la manière d'un code barre, du fait de la largeur réduite des cellules, constituant les fenêtres virtuelles mentionnées ci-dessus.

Selon la figure 4, les dispositifs de détection secondaires (12, 13), n'ayant à chaque fois que deux bits à traiter, sont constitués de deux photodiodes (14, 15) juxtaposées, permettant un traitement électronique quasi immédiat. Dans l'exemple figuré, les deux fractions secondaires du signal optique numérique représentent par exemple un signal digital incrémental, permettant au capteur de position de fonctionner de façon hybride sur un mode combiné absolu et incrémental, et un signal de synchronisation à deux bits dont les états respectifs sont en quadrature de phase. La périodicité de lecture peut être largement augmentée par cette configuration, sans pour autant alourdir le traitement électronique du signal lu sur les détecteurs.

La séparation des détecteurs secondaires (12, 13) conduit par ailleurs à la possibilité d'une meilleure gestion de l'espace dévolu à la détection des codes optiques en sortie du codeur, notamment dans l'hypothèse où l'encombrement disponible est réduit.

Ces exemples ne sont indiqués qu'à titre informatif, et ne limitent pas la portée du présent droit.

## Revendications

1. Système optique pour la lecture de la position d'un corps en mouvement, comportant :
- une source de lumière (1) émettant un faisceau de lumière laser (2) ;
- des moyens de calibrage du type diaphragme (4) à fente contrôlant la section du faisceau (2) ;
- un codeur optique (5) diffractif solidaire du corps en mouvement, comportant des cellules de codage dotées d'un motif diffractif et positionnées en vue d'interférer successivement avec le faisceau (2) calibré, chaque cellule générant par modulation de phase un code optique numérique sous forme de taches lumineuses (9) codant au moins la position de la cellule dans ledit corps ;
- un dispositif de détection primaire (7) du code optique formant le signal issu du codeur optique (5), constitué d'au moins une rangée (8) de cellules de détection, et relié à des moyens de traitement électronique ;
**caractérisé en ce que** les dimensions relatives des cellules de codage et de la fente du diaphragme (4), dans la direction du mouvement, sont telles que ladite fente couvre sensiblement n cellules, le corps en mouvement comportant une succession de groupes de n cellules générant au moins au niveau du dispositif de détection primaire (7) le même code optique avec un décalage spatial des taches (9, 9', 9") par rapport aux taches (9, 9', 9") des codes des cellules adjacentes du même groupe.

2. Système optique selon la revendication précédente, **caractérisé en ce que** les motifs diffractifs des n cellules de codage de chaque groupe génèrent des décalages des taches (9, 9', 9") de leur code dans la direction de l'axe de la ou des rangées (8) de cellules du dispositif de détection primaire (7).

3. Système optique selon la revendication 1, **caractérisé en ce que** les motifs diffractifs des n cellules de codage de chaque groupe génèrent des décalages des taches (9, 9', 9") du code dans une direction d'allure perpendiculaire à l'axe de la ou des rangées (8) de cellules du dispositif de détection primaire (7).

4. Système optique selon la revendication 1, **caractérisé en ce que** les motifs diffractifs des n cellules de codage de chaque groupe génèrent un double décalage des taches (9, 9', 9") du code dans deux directions d'allure respectivement parallèle et perpendiculaire à l'axe de la ou des rangées (8) de cellules de détection.

5. Système optique selon l'une quelconque des revendications précédentes, **caractérisé en ce que** le code optique numérique généré par le codeur diffractif (5) dans chaque cellule de codage est composite, chaque cellule multiplexant au moins deux signaux distincts constituant des fractions du code, une fraction principale commune aux n cellules de chaque groupe et au moins une fraction secondaire.

6. Système optique selon la revendication précédente, **caractérisé en ce que** chaque fraction secondaire du code optique numérique est lue par un dispositif de détection secondaire (12, 13) distinct du dispositif de détection primaire (7).

7. Système optique selon la revendication précédente, **caractérisé en ce que** les codes lus par les différents dispositifs de détection (7, 12, 13) sont traités par des moyens de traitement séparés.

8. Système optique selon l'une des revendications 5 à 7, **caractérisé en ce que** l'une des fractions du code composite est constituée par au moins les deux bits de moindre signification du code numérique donnant la position de la cellule de codage.

9. Système optique selon l'une des revendications 5 à 7, **caractérisé en ce que** l'une des fractions du code composite est constituée par des signaux de synchronisation en quadrature de phase.

10. Système optique selon l'une des revendications 5 à 9, **caractérisé en ce que** le décalage spatial des taches lumineuses (9, 9', 9") de cellules de codage adjacentes s'applique aussi au niveau des dispositifs de détection secondaires (12, 13) détectant les fractions secondaires du code optique numérique.

11. Système optique selon l'une quelconque des revendications précédentes, **caractérisé en ce que** le corps est animé d'un mouvement de rotation, le codeur (5) étant de géométrie circulaire et doté de cellules de codage disposées sur une piste annulaire divisée en portions de secteurs angulaires.

## Claims

1. Optical system for reading the position of a moving body, including:
- a light source (1) emitting a beam of laser light (2);
- calibration means (4) of the diaphragm type with a slot controlling the section of the beam (2);
- a diffractive optical coder (5) attached to the moving body, including coding cells having a diffraction motif and so positioned as to successively interfere with the calibrated beam (2), each cell generating by phase modulation a digital optical code in the form of light dots (9) coding at least the position of the cell in the said body;
- a primary detection device (7) of the optical code forming the output signal of the optical coder (5), formed of at least one row (8) of detection cells, and connected to electronic processing means;
**characterised by** the fact that the relative dimensions of the coding cells and of the slot of the diaphragm (4), in the direction of the movement, are such that the said slot substantially covers n cells, the moving body including a succession of groups of n cells generating at least at the primary detection device (7) the same optical code with a spatial offset of the dots (9, 9' ,9") relative to the dots (9, 9' , 9") of the codes of the adjacent cells of the same group.

2. Optical system as described in the preceding claim, **characterised by** the fact that the diffraction motifs of the n coding cells of each group generate offsets of the dots (9, 9', 9") of their code in the direction of the axis of the row or rows (8) of cells of the primary detection device (7).

3. Optical system as described in claim 1, **characterised by** the fact that the diffraction motifs of the n coding cells of each group generate offsets of the dots (9, 9', 9") of the code in a direction perpendicular to the axis of the row or rows (8) of cells of the primary detection device (7).

4. Optical system as described in claim 1, **characterised by** the fact that the diffraction motifs of the n coding cells of each group generate a double offset of the dots (9, 9', 9") of the code in two directions respectively parallel with and perpendicular to the axis of the row or rows (8) of detection cells.

5. Optical system as described in any one of the preceding claims, **characterised by** the fact that the digital optical code generated by the diffractive coder (5) in each coding cell is composite, each cell multiplexing at least two distinct signals forming fractions of the code, a principal fraction common to the n cells of each group and at least one secondary fraction.

6. Optical system as described in the preceding claim, **characterised by** the fact that each secondary fraction of the digital optical code is read by a secondary detection device (12, 13) distinct from the primary detection device (7).

7. Optical system as described in the preceding claim, **characterised by** the fact that the codes read by the different detection devices (7, 12, 13) are processed by separate processing means.

8. Optical system as described in one of claims 5 to 7, **characterised by** the fact that one of the fractions of the composite code is formed of at least the two bits of least significance of the digital code giving the position of the coding cell.

9. Optical system as described in one of claims 5 to 7, **characterised by** the fact that one of the fractions of the composite code is formed by synchronisation signals in phase quadrature.

10. Optical system as described in one of claims 5 to 9, **characterised by** the fact that the spatial offset of the light dots (9, 9', 9") of adjacent coding cells is also applied at the secondary detection devices (12, 13) detecting the secondary fractions of the digital optical code.

11. Optical system as described in any one of the preceding claims, **characterised by** the fact that the body is in rotary motion, the coder (5) being of circular geometry and having coding cells arranged on an annular track divided into portions of angular sectors.

## Patentansprüche

1. Optisches System zum Lesen der Position eines in Bewegung befindlichen Körpers, umfassend:
- eine Lichtquelle (1), die einen Laserlichtstrahl (2) sendet;
- Kalibrierungsmittel vom Typ Schlitzblende (4), die den Querschnitt des Strahls (2) steuert;
- einen diffraktiven optischen Codierer (5), der mit dem in Bewegung befindlichen Körper fest verbunden ist und Codierungszellen umfasst, die mit einem diffraktiven Muster versehen sind und positioniert sind, um nacheinander mit dem kalibrierten Strahl (2) zu interferieren, wobei jede Zelle durch Phasenmodulation einen digitalen optischen Code in Form von Lichtflecken (9) erzeugt, die mindestens die Position der Zelle in dem Körper codieren;
- eine Vorrichtung (7) zur primären Erfassung des optischen Codes, der das aus dem optischen Codierer (5) austretende Signal bildet, die aus mindestens einer Reihe (8) von Erfassungszellen besteht und mit Mitteln zur elektronischen Verarbeitung verbunden ist;
**dadurch gekennzeichnet, dass** die relativen Abmessungen der Codierungszellen und des Schlitzes der Blende (4) in der Richtung der Bewegung so gewählt sind, dass der Schlitz im Wesentlichen n Zellen abdeckt, wobei der in Bewegung befindliche Körper eine Folge von Gruppen von n Zellen umfasst, die mindestens auf Höhe der Vorrichtung (7) zur primären Erfassung denselben optischen Code mit einer räumlichen Verschiebung der Flecke (9, 9', 9") bezüglich der Flecke (9, 9', 9") der Codes der benachbarten Zellen derselben Gruppe erzeugen.

2. Optisches System nach dem vorhergehenden Anspruch, **dadurch gekennzeichnet, dass** die diffraktiven Muster der n Codierungszellen jeder Gruppe Verschiebungen der Flecke (9, 9', 9") ihres Codes in der Richtung der Achse der Reihe oder Reihen (8) von Zellen der Vorrichtung (7) zur primären Erfassung erzeugen.

3. Optisches System nach Anspruch 1, **dadurch gekennzeichnet, dass** die diffraktiven Muster der n Codierungszellen jeder Gruppe Verschiebungen der Flecke (9, 9', 9") des Kodes in einer senkrecht zur Achse der Reihe oder Reihen (8) von Zellen der Vorrichtung (7) zur primären Erfassung verlaufenden Richtung erzeugen.

4. Optisches System nach Anspruch 1, **dadurch gekennzeichnet, dass** die diffraktiven Muster der n Codierungszellen jeder Gruppe eine doppelte Verschiebung der Flecke (9, 9', 9") des Codes in zwei parallel bzw. senkrecht zur Achse der Reihe oder Reihen (8) von Erfassungszellen verlaufenden Richtungen erzeugen.

5. Optisches System nach einem der vorhergehenden Ansprüche, **dadurch gekennzeichnet, dass** der von dem diffraktiven Codierer (5) in jeder Codierungszelle erzeugte digitale optische Code ein Verbundcode ist, wobei jede Zelle mindestens zwei verschiedene Signale multiplext, die Teile des Codes bilden, einen den n Zellen jeder Gruppe gemeinsamen Hauptteil und mindestens einen Nebenteil.

6. Optisches System nach dem vorhergehenden Anspruch, **dadurch gekennzeichnet, dass** jeder Nebenteil des digitalen optischen Codes durch eine Vorrichtung (12, 13) zur sekundären Erfassung gelesen wird, die von der Vorrichtung (7) zur primären Erfassung verschieden ist.

7. Optisches System nach dem vorhergehenden Anspruch, **dadurch gekennzeichnet, dass** die von den verschiedenen Erfassungsvorrichtungen (7, 12, 13) gelesenen Codes durch getrennte Verarbeitungsmittel verarbeitet werden.

8. Optisches System nach einem der Ansprüche 5 bis 7, **dadurch gekennzeichnet, dass** einer der Teile des Verbundcodes aus mindestens den beiden Bits geringerer Bedeutung des die Position der Codierungszelle angebenden digitalen Codes besteht.

9. Optisches System nach einem der Ansprüche 5 bis 7, **dadurch gekennzeichnet, dass** einer der Teile des Verbundcodes aus um 90° phasenverschobenen Synchronisationssignalen besteht.

10. Optisches System nach einem der Ansprüche 5 bis 9, **dadurch gekennzeichnet, dass** die räumliche Phasenverschiebung der Lichtflecke (9, 9', 9") von benachbarten Codierungszellen auch auf Höhe der Vorrichtung (12, 13) zur sekundären Erfassung stattfindet, die die Nebenteile des digitalen optischen Codes erfassen.

11. Optisches System nach einem der vorhergehenden Ansprüche, **dadurch gekennzeichnet, dass** der Körper in eine Drehbewegung versetzt ist, wobei der Codierer (5) von kreisförmiger Geometrie ist und mit Codierungszellen versehen ist, die auf einer in Winkelsektorteile geteilten ringförmigen Bahn angeordnet sind.
